# EUROPÄISCHE PATENTANMELDUNG

(11) **EP 1 424 248 A1**
(43) Veröffentlichungstag der Anmeldung: **02.06.2004**
(21) Anmeldenummer: 03025003.9
(22) Anmeldetag: 30.10.2003
(51) Int. Cl.: B60R 22/03

(54) **Rückhaltesystem für eine mobile Arbeitsmaschine**

(30) Priorität: 29.11.2002 DE 10255910
(71) Anmelder: STILL GMBH, D-22113 Hamburg (DE)
(72) Erfinder: Arand, Patrick, 22397 Hamburg (DE)
(74) Vertreter: Lang, Michael

(57) **Zusammenfassung**

Die Erfindung betrifft ein Rückhaltesystem für eine mobile Arbeitsmaschine (1), insbesondere ein Flurförderzeug, mit einem Fahrersitz (2) und einem Rückhaltegurt (3). Erfindungsgemäß weist das Rückhaltesystem eine auf der dem Einstieg für die Bedienperson abgewandten Seite der mobilen Arbeitsmaschine angebrachte Vorrichtung (5) zur Positionierung eines Gurtklipps (4) bei geöffnetem Gurt (3) im Griffbereich vor dem Bediener auf. Die Vorrichtung (5) erleichtert dem Bediener das Anlegen des Rückhaltegurts (3). Der Bediener wird den Rückhaltegurt (3) auch anlegen, da sonst die Betätigung von Bedienelementen (8) erschwert oder unmöglich ist. Gleichzeitig verhindert die Vorrichtung (5) das Umgehen einer Vorrichtung zum Erkennen des Schließzustandes des Rückhaltegurts (3).

## Beschreibung

Die Erfindung betrifft ein Rückhaltesystem für eine mobile Arbeitsmaschine, insbesondere ein Flurförderzeug, mit einem Fahrersitz und einem Rückhaltegurt.

Eine der häufigsten und gefährlichsten Unfallarten beim Betrieb einer mobilen Arbeitsmaschine mit sitzender Bedienperson ist das Umkippen der Maschine, weil dabei der ungesicherte Bediener aus der Fahrerkabine fallen und unter die Arbeitsmaschine geraten kann. Um das Herausfallen der Bedienperson zu verhindern, sind verschiedene Rückhaltesysteme gebräuchlich. Die weiteste Verbreitung haben dabei Gurtsysteme, insbesondere Beckengurte. Besonders bei häufigen Ein- und Aussteigevorgängen wird das Anlegen des Sicherheitsgurtes von der Bedienperson jedoch als lästig empfunden. Um dennoch ein Anlegen des Gurtes zu erzwingen, werden häufig Gurtkontaktschalter verwendet, die einen Betrieb der mobilen Arbeitsmaschine nur bei in das Gurtschloss eingestecktem Gurtklipp erlauben. Diese Sicherungsmaßnahme kann jedoch beispielsweise dadurch umgangen werden, dass der Sicherheitsgurt hinter der Rückenlehne des Fahrersitzes vorbeigeführt wird, wodurch der Fahrer trotz Betätigung des Gurtkontaktschalters die mobile Arbeitsmaschine ungesichert betreiben kann.

Der Erfindung liegt daher die Aufgabe zugrunde, ein Rückhaltesystem für eine mobile Arbeitsmaschine, insbesondere für ein Flurförderzeug, mit einem Fahrersitz, einem Rückhaltegurt mit einem Gurtklipp und einem Gurtschloss zur Verfügung zu stellen, das dem Fahrer einfaches und bequemes Ein- und Aussteigen gestattet und gleichzeitig sicherstellt, dass der Gurt ordnungsgemäß benutzt wird.

Diese Aufgabe wird erfindungsgemäß dadurch gelöst, dass auf der dem Einstieg für die Bedienperson abgewandten Seite der mobilen Arbeitsmaschine eine Vorrichtung zur Positionierung des Gurtklipps bei geöffnetem Gurt im Griffbereich vor der Bedienperson angebracht ist.

Dadurch wird der Einstieg des Fahrers in das Rückhaltesystem erleichtert, da die Vorrichtung die Bedienperson beim Einstieg nicht behindert und der Gurtklipp des Rückhaltegurts von der Vorrichtungung so gehalten wird, dass er nur noch auf einem kurzen Weg zum Gurtschloss geführt werden muss. Der Rückhaltegurt ist beim Einsteigen dabei schon halb um den Fahrer gelegt. Außerdem ist der Gurt so vor dem Fahrer angeordnet, dass er diesen schließen muss, um die Bedienelemente der mobilen Arbeitsmaschine problemlos betätigen zu können.

Es ist besonders vorteilhaft, wenn die Vorrichtung zur Positionierung des Gurtklipps in im Wesentlichen horizontaler Richtung flexibel ausgeführt ist und insbesondere bei geschlossenem Gurt der Kontur des Gurts in horizontaler Richtung im Wesentlichen folgt. Durch die flexible Ausführung wird eine Reduzierung des Bewegungsraums der Bedienperson durch die Vorrichtung minimiert. Indem die Vorrichtung der Kontur des Gurts im Wesentlichen folgt, ragen bei geschlossenem Gurt keine störenden Teile in den Griff- und Arbeitsbereich der Bedienperson.

Besonders vorteilhaft ist es, wenn die Vorrichtung zur Positionierung eines Gurtklipps eine Bewegung des Gurtklipps bei geöffnetem Gurt im Wesentlichen nur in Richtung eines Gurtschlosses ermöglicht. Dies verhindert ein Wegbinden der Vorrichtung und des Gurts aus dem Griffbereich der Bedienperson und insbesondere das Herumführen des Gurts um die Rückenlehne der mobilen Arbeitsmaschine.

Es ist zweckmäßig, dass die Positionierung des Gurtklipps bei geöffnetem Gurt im Bereich von wesentlichen Bedienelementen der mobilen Arbeitsmaschine erfolgt und/oder den Zugang dazu erschwert. Dadurch wird die Bedienperson, um ungehindert Zugang zu den Bedienelementen zu erhalten, den Gurt anlegen.

Insbesondere bei einem höhenverstellbaren Fahrersitz ist es von Vorteil, dass die Vorrichtung ebenfalls höhenverstellbar ist. Damit wird ein bequemer Einstieg der Bedienperson ermöglicht.

Es ist weiterhin von besonderem Vorteil, wenn die Vorrichtung am Fahrersitz angebracht ist, da diese somit bei einer Verstellung der Position des Fahrersitzes nicht neu eingestellt werden muss.

Es ist von besonderem Vorteil, wenn die erfindungsgemäße mechanische Verbindung derart ausgeführt ist, dass diese bei vorhandenen mobilen Arbeitsmaschinen nachrüstbar ist, da damit auch ältere Geräte auf den neuesten Sicherheitsstandard gebracht weden können.

Besonders vorteilhaft ist es, wenn ein Mittel zum Erkennen des Schließzustandes des Rückhaltegurts vorhanden ist, da so ein vorschriftswidrig nicht geschlossener Gurt erkannt werden kann.

Ebenfalls von besonderem Vorteil ist, wenn das Rückhaltesystem über eine Signalleitung derart mit der Steuerung der mobilen Arbeitsmaschine in Wirkverbindung steht, dass die Maschine nur bei geschlossenem Rückhaltegurt betreibbar ist, da damit eine versehentliche oder absichtliche Benutzung der Arbeitsmaschine bei nicht ordnungsgemäß geschlossenem Gurt verhindert wird. Da die Arbeitsmaschine nur bei geschlossenem Gurt in Betrieb genommen werden kann, ist sichergestellt, dass die Bedienperson beim Betrieb der Maschine ordnungsgemäß gesichert und somit bei einem möglichen Unfall der Arbeitsmaschine geschützt ist.

Weitere Vorteile und Einzelheiten der Erfindung werden anhand des in den schematischen Figuren dargestellten Ausführungsbeispiels näher erläutert. Dabei zeigt
- Figur 1: einen Gabelstapler mit einer erfindungsgemäßen Vorrichtung bei geöffnetem Rückhaltegurt,
- Figur 2: einen Gabelstapler mit einer erfindungsgemäßen Vorrichtung bei geschlossenem Rückhaltegurt.

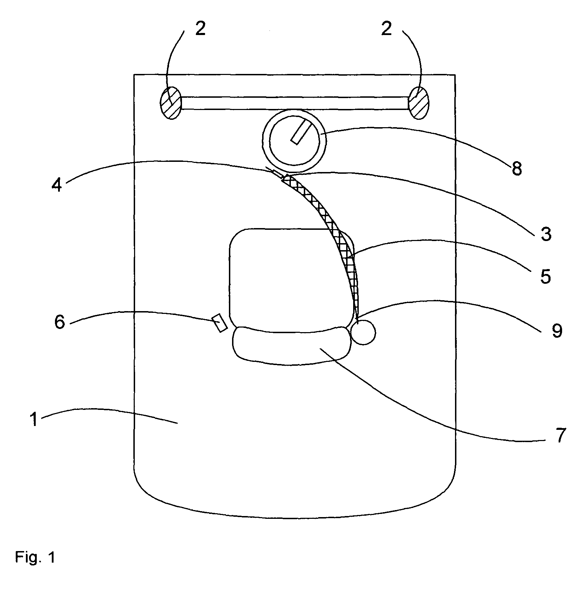

Figur 1 zeigt als Ausführungsbeispiel für eine mobile Arbeitsmaschine einen Gabelstapler 1 in der Draufsicht. Selbstverständlich können auch andere mobile Arbeitsmaschinen, wie beispielsweise Schlepper oder mobile Kräne, mit einer erfindungsgemäßen Vorrichtung ausgestattet werden. Aus Gründen der Übersichtlichkeit sind nur die vorderen Holme 2 des Fahrerschutzdachs dargestellt, während das eigentliche Dach und die dazugehörigen hinteren Holme nicht gezeigt sind. Der Gabelstapler 1 ist mit einem erfindungsgemäßen Rückhaltesystem ausgestattet, das im gezeigten Ausführungsbeispiel aus einem Beckengurt 3 mit einem Gurtklipp 4, einer erfindungsgemäßen Vorrichtung in Form eines flexiblen Arms 5 und einem Gurtschloss 6 besteht, das an einem Sitz 7 angebracht ist. Die Positionierung des Armes 5 und damit des Gurtes 3 kann dabei beispielsweise durch Federkraft erfolgen, die entweder durch die Elastizität des Armes 5 selbst, beispielsweise bei einer Ausführung aus Federblechen, oder durch eigens dafür vorgesehene Mittel wie beispielsweise elastische Bänder, aufgebracht wird. Es ist aber auch eine Ausführung ohne derartige Mittel denkbar, bei der ein Verbleib des Gurtklipps 4 in der zuletzt beim Öffnen eingenommenen Stellung erfolgt.

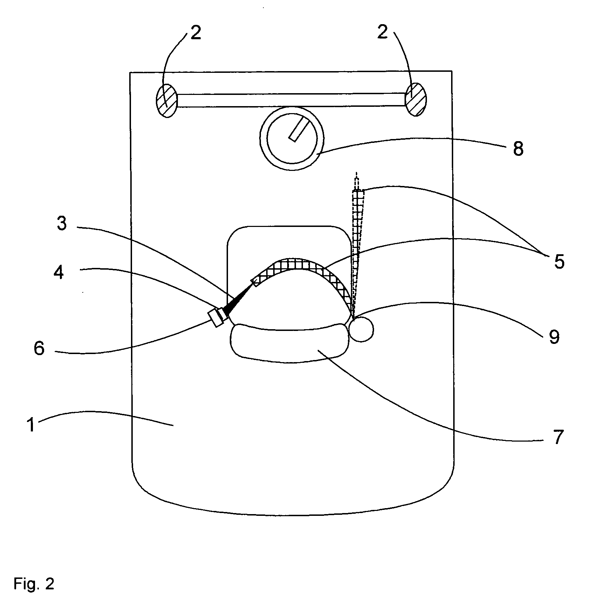

Durch Einführen des Gurtklipps 4 in das Gurtschloss 6 wird der Rückhaltegurt 3 geschlossen und es ergibt sich der in Fig. 2 gezeigte Zustand. Dabei folgt der Arm 5 erfindungsgemäß in horizontaler Richtung im Wesentlichen der Kontur des Gurts 3 und legt sich so ebenfalls um die Bedienperson. Dadurch ragen keine störenden Teile in den Bereich vor der Bedienperson und der Bewegungsraum ist im Wesentlichen mit dem eines Gurtsystems nach dem Stand der Technik ohne eine solche Vorrichtung identisch. Die flexible Ausführung reduziert auch die Verletzungsgefahr bei einem versehentlichen Anstoßen der Bedienperson, beispielsweise beim Ein- oder Aussteigen. Ein gewisser Bewegungsspielraum der Vorrichtung nach oben kann in diesem Zusammenhang ebenfalls von Nutzen sein, sofern eine selbsttätige Rückkehr annähernd in die Ausgangsposition sichergestellt ist.

Erfindungsgemäß ist der Bewegungsbereich des Arms 5 in Richtung vom Gurtschloss 6 weg begrenzt. Es ist sinnvoll, die Bewegung nicht weiter als bis zu einer Ausrichtung näherungsweise parallel zur Fahrzeuglängsachse, wie dies in Fig. 2 als Phantomdarstellung gezeigt ist, zuzulassen. Dies verhindert das Herumführen des Gurts 3 hinter dem Sitz 7, lässt aber noch hinreichende Möglichkeiten, beispielsweise für Wartungsarbeiten, ungehindert an Bedienelemente zu gelangen und verringert aufgrund der Flexibilität der Vorrichtung 5 die Verletzungsgefahr.

Die gezeigte Ausführung mit einem Beckengurt 3 ist für mobile Arbeitsmaschinen aufgrund der niedrigen Fahrgeschwindigkeit typisch, es kann jedoch auch ein anderes Gurtsystem, beispielsweise ein Dreipunktgurt, verwendet werden.

Besteigt die Bedienperson den Fahrersitz 7, so wird sie schon beinahe vom Gurt 3 umschlossen und muss den Gurtklipp 4 nur noch einen kurzen Weg zum Gurtschloss 6 führen. Sie wird dies insbesondere auch deshalb tun, weil bei geöffnetem Gurt 3 der flexible Arm 5 die Betätigung der Bedienelemente, wie beispielsweise des Lenkrades 8, behindern kann. In geschlossener Stellung hingegen besteht für die Bedienperson hinsichtlich Bedienung und Sichtverhältnissen kein Unterschied zu einem Gurtsystem nach dem Stand der Technik.

Um ein bequemes Ein- und Aussteigen zu ermöglichen, sollte der Befestigungspunkt 9 der mechanischen Vorrichtung 5 in seiner Höhe verstellbar sein, insbesondere bei einem höhenverstellbaren Fahrersitz 7. Dadurch kann auch eine Anpassung an die Anatomie der Bedienperson vorgenommen werden.

Durch eine Anbringung der Vorrichtung 5 am Fahrersitz 7 ergibt sich eine besonders einfache Anordnung, bei der auch bei einer Verstellung der Position des Fahrersitzes 7, sowohl in der Höhe als auch nach vorn oder hinten, der Arm 5 relativ zum Fahrersitz 7 seine Position behält.

Um sicherzustellen, dass die Bedienperson den Gurt 3 tatsächlich anlegt, kann ein Mittel zum Erkennen des Schließzustandes des Gurtes 3 vorgesehen werden. Dieses kann beispielsweise in einem Schalter im Gurtschloss 6 bestehen, aber auch andere Lösungen sind möglich. Der Fahrer kann dann bei nicht angelegtem Gurt 3 beispielsweise durch ein Warnsignal auf diesen Umstand hingewiesen werden.

Noch größere Sicherheit wird erzielt, wenn die Rückhaltevorrichtung über eine Signalleitung so mit der Steuerung des Gabelstaplers 1 in Wirkverbindung steht, dass dessen Betrieb nur bei geschlossenem Gurt 3 möglich ist. Bei bisherigen Gurtanordnungen konnten solche Schaltungen dadurch umgangen werden, dass der Fahrer den Rückhaltegurt permanent geschlossen lässt und diesen dabei beispielsweise hinter der Rückenlehne des Sitzes 7 vorbeiführt. Dies wird nun durch die Begrenzung des Bewegungsbereichs des Gurtklipps 4 weg vom Gurtschloss 6 verhindert. Durch diese Maßnahme sowie das erleichterte Anlegen des Gurtes 3 wird somit ein erheblicher Sicherheitsgewinn erzielt.

## Patentansprüche

1. Rückhaltesystem für eine mobile Arbeitsmaschine (1), insbesondere für ein Flurförderzeug, mit einem Fahrersitz (7), einem Rückhaltegurt (3) mit einem Gurtklipp (4) und einem Gurtschloss (6), **dadurch gekennzeichnet, dass** auf der dem Einstieg für die Bedienperson abgewandten Seite der mobilen Arbeitsmaschine eine Vorrichtung (5) zur Positionierung des Gurtklipps (4) bei geöffnetem Gurt (3) im Griffbereich vor einer Bedienperson angebracht ist.

2. Rückhaltesystem nach Anspruch1, **dadurch gekennzeichnet, dass** die Vorrichtung (5) zur Positionierung des Gurtklipps (4) in im Wesentlichen horizontaler Richtung flexibel ausgeführt ist und insbesondere bei geschlossenem Gurt (3) der Kontur des Gurts (3) in horizontaler Richtung im Wesentlichen folgt.

3. Rückhaltesystem nach Anspruchl oder 2, **dadurch gekennzeichnet, dass** die Vorrichtung (5) zur Positionierung des Gurtklipps (4) eine Bewegung des Gurtklipps (4) bei geöffnetem Gurt (3) im Wesentlichen nur in Richtung des Gurtschlosses (6) ermöglicht.

4. Rückhaltesystem nach einem der Ansprüche 1 bis 3, **dadurch gekennzeichnet, dass** die Positionierung des Gurtklipps (4) bei geöffnetem Gurt (3) im Bereich von wesentlichen Bedienelementen (8) der mobilen Arbeitsmaschine (1) erfolgt und/oder den Zugang dazu erschwert.

5. Rückhaltesystem nach einem der Ansprüche 1 bis 4, **dadurch gekennzeichnet, dass** die Vorrichtung (5) zur Positionierung eines Gurtklipps (4) höhenverstellbar ist.

6. Rückhaltesystem nach einem der Ansprüche 1 bis 5, **dadurch gekennzeichnet, dass** die Vorrichtung (5) zur Positionierung eines Gurtklipps (4) am Fahrersitz (7) angebracht ist.

7. Rückhaltesystem nach einem der Ansprüche 1 bis 6, **dadurch gekennzeichnet, dass** die Vorrichtung (5) zur Positionierung des Gurtklipps (4) derart ausgeführt ist, dass sie bei vorhandenen mobilen Arbeitsmaschinen (1) nachrüstbar ist.

8. Rückhaltesystem nach einem der Ansprüche 1 bis 8, **dadurch gekennzeichnet, dass** ein Mittel zum Erkennen des Schließzustandes des Rückhaltegurts (3) vorhanden ist.

9. Rückhaltesystem nach einem der Ansprüche 1 bis 7, **dadurch gekennzeichnet, dass** das Rückhaltesystem mittels einer Signalleitung mit der Steuerung der mobilen Arbeitsmaschine (1) derart in Wirkverbindung steht, dass die mobile Arbeitsmaschine (1) nur bei geschlossenem Rückhaltegurt (3) betreibbar ist.
